# EUROPÄISCHE PATENTANMELDUNG

(11) **EP 2 684 912 A1**
(43) Veröffentlichungstag der Anmeldung: **15.01.2014**
(21) Anmeldenummer: 12175550.8
(22) Anmeldetag: 09.07.2012
(51) Int. Cl.: C08K 5/37, C08L 21/00

(54) **Kieselsäurehaltige Kautschukmischungen enthaltend w-Mercaptocarbonsäureester von mehrwertigen Alkoholen**

(71) Anmelder: LANXESS Deutschland GmbH, 50569 Köln (DE)
(72) Erfinder: Feldhues, Ulrich, 51465 Bergisch Gladbach (DE); Unterberg, Heinz, 41540 Dormagen (DE); Weidenhaupt, Hermann-Josef, 50259 Pulheim (DE); Wiedemeier, Melanie, 41540 Dormagen (DE)

(57) **Zusammenfassung**

Die vorliegende Erfindung betrifft Kautschukmischungen enthaltend jeweils mindestens einen Kautschuk, ein schwefelhaltiges Alkoxysilan, einen siliziumbasierenden Füllstoff und einen ω-Mercaptocarbonsäureester von mehrwertigen Alkoholen

## Beschreibung

Die vorliegende Erfindung betrifft kieselsäurehaltige Kautschukmischungen enthaltend ω-Mercaptocarbonsäureester von mehrwertigen Alkoholen, daraus hergestellte Kautschukvulkanisate und deren Verwendung.

Kieselsäurehaltige Kautschukmischungen sind wichtige Ausgangsmaterialien, beispielsweise für die Herstellung von Reifen mit verringertem Rollwiderstand. Diese leisten beim Abrollen weniger Verformungsarbeit und senken deshalb den Kraftstoffverbrauch. Durch die in verschiedenen Staaten beschlossene Kennzeichnungspflicht des Rollwiderstands für Reifen besteht ein großes Interesse daran, diesen Widerstand weiter zu senken, was jedoch nicht auf Kosten des Nassrutschverhaltens geschehen darf, da letzteres sicherheitsrelevant ist.

Zur Verringerung des Rollwiderstands sind eine Reihe von Lösungsvorschlägen ausgearbeitet worden. In DE 2 255 577 A und DE 4 435 311 A, EP-A 0 0670 347 sowie US-A-4 709 065 sind polysulfidische Silane als Verstärkungsadditive für kieselsäurehaltige Kautschukvulkanisate beschrieben. Das Eigenschaftsprofil der so hergestellten Kautschukvulkanisate ist noch nicht optimal. Insbesondere die Abriebwerte sind unvorteilhaft hoch. Hohe Abriebwerte können sich sehr nachteilig auf die Lebensdauer der Produkte auswirken.

Bei der Verarbeitung von Kautschuken ist es zudem wichtig, dass die zunächst zubereitete Kautschukmischung mit den Additiven eine niedrige Fließviskosität (Mooney Viskosität ML 1+4/100°C) hat, damit sie leicht verarbeitet werden kann. Zur Verbesserung der Verarbeitbarkeit von kieselsäurehaltigen Kautschukmischungen wurden weitere Zusatzstoffe vorgeschlagen, wie Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100% bis 300%) oder auch die Härte der Vulkanisate vermindern, so dass die verstärkende Wirkung des Füllstoffes Einbuße erleidet. Eine zu geringe Härte oder Steifigkeit des Vulkanisats resultiert aber in unbefriedigendes Fahrverhalten des Reifens besonders in Kurven. Zur Erhöhung der Härte des Vulkanisats kann der Anteil an verstärkendem Füllstoff erhöht, oder der Anteil an Weichmacheröl verringert werden, wobei jede dieser beiden Maßnahmen den Nachteil der höheren Mischungsviskosität bei der Verarbeitung bedingt.

In der EP 1 134 253 werden Polyetheradditive für kieselsäurehaltige Kautschukvulkanisate beschrieben, welche den o. g. Nachteil der Verminderung des Spannungswertes nicht zeigen. Allerdings benötigt der Fachmann hohe Einsatzmengen (in den Beispielen werden 4 phr bzw. 8 phr eingesetzt). Die Lehre der EP 1 134 253 ist darauf ausgerichtet, ein verbessertes Verarbeitungsverhalten zu erzielen, wobei die Ausführungsbeispiele auch eine niedrige Mischungsviskosität und eine erhöhte Härte belegen. Es gibt jedoch keinen Hinweis darauf, dass die verwendeten Polyetheradditive den Abrieb, das Nassrutschverhalten oder den Rollwiderstand gegenüber dem Stand der Technik verbessern.

In der EP 0 489 313 werden Glykolfunktionen enthaltende Additive mit guten mechanischen Eigenschaften und verbessertem Hystereseverhalten beschrieben. Im Vergleich mit dem Bis-[-3-(triethoxysilyl)-propyl]-tetrasulfid gemäß DE-OS 2 255 577 zeigen die Beispiele aber keine Verbesserung im Rollwiderstand (tan δ bei 60°C). Das Nassrutschverhalten (tan d bei niedriger Temperatur) wird praktisch nicht beeinflusst. Zudem enthält die EP 0 489 313 keinen Hinweis, dass die verwendeten Glykolfunktionen enthaltenden Additive den Abrieb gegenüber dem Stand der Technik verbessern.

Des Weiteren wird in der EP 1 000 968 ein Bis-[-3-(triethoxysilyl)-propyl]-tetrasulfid in Kombination mit einem speziellen Reversionsschutzmittel in SBR eingesetzt. Das Nassrutschverhalten (tan δ bei 0°C) und der Rollwiderstand (tan δ bei 60°C) werden gegenüber dem Stand der Technik nicht und der Abrieb nur leicht verbessert. Letzterer ist aber immer noch unvorteilhaft hoch.

In der EP 0 791 622 B1 wird eine Kautschukzusammensetzung mit mind. einem Elastomer auf Dien-Basis, Kieselsäure und Ruß als Füllstoff und Tetrathiodipropanolpolysulfid allein oder zusammen mit Bis(3-trialkoxysilylalkyl)polysulfid beschrieben. Allerdings ist die Menge an Tetrathiodipropanolpolysulfid dabei größer als die Menge an Bis(3-trialkoxysilylalkyl)polysulfid, was wirtschaftlich unvorteilhaft ist. Insbesondere scheint die Zugabe von Tetrathiodipropanolpolysulfid das Nassrutschverhalten zu verschlechtern. Zudem zeigen diese Mischung sehr niedrige Zugfestigkeitswerte und hohe Abriebe auf.

Aufgabe der vorliegenden Erfindung ist es, Additive zu finden und damit neue Kautschukmischungen bereitzustellen, die bei weiterhin guter Fließfähigkeit in Vulkanisate mit erhöhter Härte bzw. Steifigkeit überführt werden können, welche bei der Anwendung in Reifen den Rollwiderstand, Abrieb und das Nassrutschverhalten verbessern.

Überraschend wurde nun gefunden, dass in Kombination mit schwefelhaltigen Alkoxysilanen ω-Mercaptocarbonsäureester von mehrwertigen Alkoholen die Fließfähigkeit von Kautschukmischungen nicht wesentlich beeinträchtigen und zu Vulkanisaten mit gutem dynamischen Verhalten und deutlich erhöhter Härte/Steifigkeit und insbesondere mit geringem Abrieb führen.

Gegenstand der Erfindung sind daher Kautschukmischungen, enthaltend jeweils mindestens einen Kautschuk, ein schwefelhaltiges Alkoxysilan, einen kieselsäurebasierenden Füllstoff, und einen ω-Mercapto-C₂-C₆-carbonsäureester eines mehrwertigen C₂-C₆-Alkohols, wobei mindestens 33%, bevorzugt mindestens 50% und besonders bevorzugt mindestens 66 % und am meisten bevorzugt mindestens 75%, jedoch mindestens 2 der Hydroxygruppen des mehrwertigen C₂-C₆-Alkohols mit ω-Mercapto-C₂-C₆-carbonsäure(n) verestert sind. Typischerweise weist der mehrwertige C₂-C₆ Alkohol maximal eine Hydroxygruppe pro C-Atom auf. Bevorzugt handelt es sich bei dem mehrwertigen Alkohol um Ethylenglycol, Diethylenglycol, Triethylenglycol, Trimethylolpropan, Neopentylglykol, Glycerin oder Pentaerythrit, besonders bevorzugt um Ethylenglycol, Trimethylolpropan oder Pentaerythrit, und ganz besonders bevorzugt um Trimethylolpropan oder Pentaerythrit. Als ω-Mercapto-C₂-C₆-carbonsäure kommen Carbonsäuren in Frage, die zwischen Thiol- und Carboxylgruppe eine lineare oder verzweigte, bevorzugt eine lineare, C₁-C₅-Alkandiyleinheit, bevorzugt eine C₁-C₃ Alkandiyleinheit und ganz besonders bevorzugt eine C₂- Alkandiyleinheit aufweisen. Es können auch unterschiedliche ω-Mercapto-C₂-C₆-carbonsäuren mit dem mehrwertigen Alkohol verestert sein. Besonders bevorzugte Ausführungsformen der vorliegenden ω-Mercapto-C₂-C₆-carbonsäureester von mehrwertigen Alkoholen sind Verbindungen der Formeln (I), (II) oder (III) 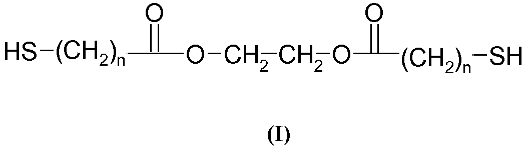 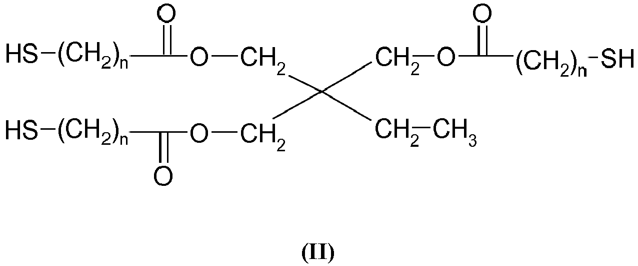 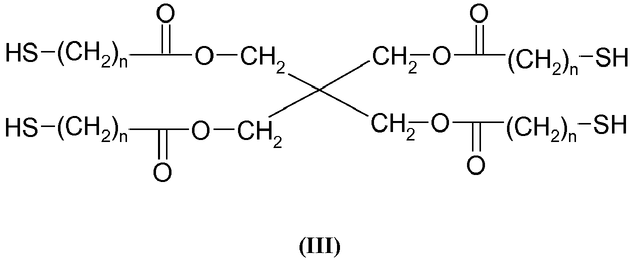 wobei n für 1, 2 oder 3, vorzugsweise für 1 oder 2, besonders bevorzugt für 2 steht.

Bevorzugt sind Kautschukmischungen, die eine oder mehrere Verbindung der Formel (II) und/oder (III) enthalten, besonders bevorzugt Kautschukmischungen, die wenigstens eine Verbindung der Formel (III) enthalten und am meisten bevorzugt Kautschukmischungen, die Trimethylolpropan-tri-3-mercaptopropionat (CAS-Nr.: 33007-83-9) und/oder Pentaerythritol-tetra-3-mercaptopropionat (CAS-Nr.: 7575-23-7) enthalten.

Die erfindungsgemäßen Kautschukmischungen können die ω-Mercaptocarbonsäureester von mehrwertigen Alkoholen, auch ganz oder teilweise in Form ihrer Salze, z.B. Lithium-, Natrium-, Kalium-, Calcium-, Strontium-, Barium- und/oder Zinksalze, bevorzugt in Form der Zinksalze enthalten. Für die Auslegung des Begriffs ω-Mercaptocarbonsäureester von mehrwertigen Alkoholen in den Ansprüchen gelten daher auch solche Verbindungen als mit umfasst.

Bei den erfindungsgemäßen Kautschukmischungen können die Thiolfunktionen der ω-Mercaptocarbonsäureester von mehrwertigen Alkoholen auch teilweise intra- oder intermolekular zu Disulfidgruppen oxidiert vorliegen, wobei bei intermolekularer Disulfidbildung mit analogen Verbindungen und/oder anderen Thiolen auch oligomere oder polymere Strukturen vorliegen können. Für die Auslegung des Begriffs ω-Mercaptocarbonsäureester von mehrwertigen Alkoholen in den Ansprüchen gelten daher auch solche Verbindungen als mit umfasst.

Die ω-Mercaptocarbonsäureester von mehrwertigen Alkoholen können auch teilweise oder vollständig auf inerten, organischen oder anorganischen Trägern absorbiert eingesetzt werden. Bevorzugte Trägermaterialien sind Kieselsäure, natürliche und synthetische Silikate, Aluminiumoxid und/oder Russe.

Der Gesamtgehalt der ω-Mercaptocarbonsäureester von mehrwertigen Alkoholen in den erfindungsgemäßen Kautschukmischungen beträgt vorzugsweise 0,1 bis 15 phr, besonders bevorzugt 0,3 bis 7 phr, ganz besonders bevorzugt 0,5 bis 3 phr und am meisten bevorzugt 0,7 bis 1,5 phr. Die Einheit phr steht für Gewichtsteile bezogen auf 100 Gewichtsteile an in der Kautschukmischung eingesetztem Kautschuk.

Für die Herstellung der erfindungsgemäßen Kautschukmischungen können Naturkautschuk und Synthesekautschuke verwendet werden. Bevorzugte Synthesekautschuke sind beispielsweise
BR - Polybutadien
ABR - Butadien/Acrylsäure-C₁-C₄-alkylester-Copolymerisat
CR - Polychloropren
IR - Polyisopren
SBR - Styrol/Butadien-Copolymerisate mit Styrolgehalten von 1 - 60, vorzugsweise 20-50 Gew-%
IIR - Isobutylen/Isopren-Copolymerisate
NBR - Butadien/Acrylnitril-Copolymerisate mit Acrylnitrilgehalten von 5-60, vorzugsweise 10-50 Gew.-%
HNBR - teilhydrierter oder vollständig hydrierter NBR-Kautschuk
EPDM - Ethylen/Propylen/Dien-Copolymerisate
sowie Mischungen aus zwei oder mehr dieser Kautschuke.

Bevorzugt enthalten die erfindungsgemäßen Kautschukmischungen mindestens einen SBR-Kautschuk und mindestens einen BR-Kautschuk, besonders bevorzugt im Gewichtsverhältnis SBR:BR von 60:40 bis 90:10.

In einer vorteilhaften Ausführungsform enthalten die erfindungsgemäßen Kautschukmischungen zudem mindestens einen NR-Kautschuk. Besonders bevorzugt weisen sie wenigstens einen SBR-Kautschuk, wenigstens einen BR-Kautschuk und wenigstens einen NR-Kautschuk auf, wobei ganz besonders bevorzugt das Gewichtsverhältnis von SBR-Kautschuk zu BR-Kautschuk zu NR-Kautschuk 60 bis 85 : 10 bis 35 : 5 bis 20 beträgt.

Als schwefelhaltige Alkoxysilane für die erfindungsgemäßen Kautschukmischungen sind z.B. Bis-(triethoxysilylpropyl)tetrasulfan (z.B. Si 69 von Evonik) und Bis-(triethoxysilylpropyl)disulfan (z.B. Si 75 von Evonik), 3-(Triethoxysilyl)-1-propanthiol, polyetherfunktionalisierte Mercaptosilane wie Si 363 von Evonik, thioesterfunktionalisierte Alkoxysilane wie NXT oder NXT Z von Momentive (früher GE) geeignet. Es können auch Mischungen der schwefelhaltigen Alkoxysilane eingesetzt werden. Flüssige schwefelhaltige Alkoxysilane können zur besseren Dosierbarkeit und/oder Dispergierbarkeit auf einem Träger aufgezogen sein (dry liquid). Der Wirkstoffgehalt liegt zwischen 30 und 70 Gew.-Teilen, bevorzugt 40 und 60 Gew.-Teilen je 100 Gew.-Teile dry liquid.

Der Anteil der schwefelhaltigen Alkoxysilane in den erfindungsgemäßen Kautschukmischungen beträgt vorzugsweise 2 bis 20 phr, besonders bevorzugt 3 bis 11 phr und ganz besonders bevorzugt 5 bis 8 phr, jeweils berechnet als 100%iger Wirkstoff. Vorzugsweise ist die Menge an schwefelhaltigem Alkoxysilan größer oder gleich der Gesamtmenge an ω-Mercaptocarbonsäureestern von mehrwertigen Alkoholen. Besonders bevorzugt beträgt das Gewichtsverhältnis von schwefelhaltigem Alkoxysilan zur Gesamtmenge an ω-Mercaptocarbonsäureestern von mehrwertigen Alkoholen 1,5:1 bis 20:1, ganz besonders bevorzugt 3:1 bis 15:1 und am meisten bevorzugt 5:1 bis 10:1.

Die erfindungsgemäße Kautschukmischung enthält zudem einen oder mehrere kieselsäurebasierende Füllstoffe. Vorzugsweise werden dafür folgende Stoffe verwendet:
- Kieselsäure, insbesondere Fällungskieselsäure oder pyrogene Kieselsäure, hergestellt z.B. durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.
- synthetische Silikate, wie Aluminiumsilikat, Erdalkalisilikate wie Magnesium- oder Calciumsilikat, mit BET-Oberflächen von 20 - 400 m²/g und Primärteilchengröße von 10-400nm,
- natürliche Silikate, wie Kaolin und andere natürliche vorkommende Kieselsäuren,
- Glasfasern auch in Formen von Matten und Strängen,
- Mikroglaskugeln.

Es können selbstverständlich zusätzliche Füllstoffe verwendet werden. Insbesondere sind hierfür nach dem Flammruß, Furnace- oder Gasruß-Verfahren hergestellt Ruße geeignet, welche BET-Oberflächen von 20 - 200 m²/g besitzen, wie SAF-, ISAF-, IISAF-, HAF-, FEF- oder GPF-Ruße.

Der Gesamtgehalt an Füllstoffen beträgt vorzugsweise 10 bis 200 phr, besonders bevorzugt 50 bis 160 phr und ganz besonders bevorzugt 60 bis 120 phr.

Eine besonders bevorzugte Ausführungsform stellt die Kombination von Kieselsäure, Ruß und ω-Mercaptocarbonsäureestern von mehrwertigen Alkoholen dar. Dabei kann das Verhältnis von Kieselsäure zu Ruß in beliebigen Grenzen variieren, wobei für die Anwendung in Reifen ein Kieselsäure : Ruß - Gewichtsverhältnis von 20 : 1 bis 1,5 : 1 bevorzugt ist.

In einer bevorzugten Ausführungsform enthalten die erfindungsgemäßen Kautschukmischungen auch einen oder mehrere Vernetzer. Hierfür sind insbesondere Schwefel-basierende oder peroxidische Vernetzer geeignet.

Als peroxidische Vernetzer werden vorzugsweise Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)butan, 4,4-Di-tert-butylperoxynonylvalerat, Dicumylperoxid, 2,5-Dimethyl-2,5-di(tert-butylperoxy)hexan, tert-Butylcumylperoxid, 1,3-Bis(t-butylperoxyisopropyl)benzol, Di-tert-butylperoxid und 2,5-Dimethyl-2,5-di(tert-butylperoxy)-3-hexin eingesetzt.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellitat, Ethylenglycoldi(meth)acrylat, Butandioldi(meth)acrylat, Trimetylolpropantri(meth)acrylat, Zinkdiacrylat, Zinkdimethacrylat, 1,2-Polybutadien oder N,N'-m-Phenylendimaleinimid geeignet.

Als Vernetzer kann Schwefel in elementarer löslicher oder unlöslicher Form oder in Form von Schwefelspendern eingesetzt werden. Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT) und Tetramethylthiuramdisulfid (TMTD) in Frage.

Grundsätzlich kann die Vernetzung der erfindungsgemäßen Kautschukmischungen mit Schwefel oder Schwefelspendern allein erfolgen, oder zusammen mit Vulkanisationsbeschleunigern, wofür z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate geeignet sind. Weiterhin sind auch Zinkdiamindiisocyanat, Hexamethylentetramin, 1,3-Bis(citraconimidomethyl)-benzol sowie zyklische Disulfane geeignet. Bevorzugt enthalten die erfindungsgemäßen Kautschukmischungen Schwefel-basierende Vernetzer und Vulkanisationsbeschleuniger.

Besonders bevorzugt werden als Vernetzungsmittel Schwefel, Magnesiumoxid und/oder Zinkoxid eingesetzt, denen die bekannten Vulkanisationsbeschleuniger, wie Merkaptobenzothiazole, Thiazolsulfenamide, Thiurame, Thiocarbamate, Guanidine, Xanthogenate und Thiophosphate zugesetzt werden.

Die Vernetzungsmittel und Vulkanisationsbeschleuniger werden bevorzugt in Mengen von 0,1 bis 10 phr, besonders bevorzugt von 0,1 bis 5 phr, eingesetzt.

Die erfindungsgemäßen Kautschukmischungen können weitere Kautschukhilfsmittel enthalten, wie Reaktionsbeschleuniger, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol und Reversionsschutzmittel.

Diese Kautschukhilfsmittel werden in üblichen Mengen eingesetzt, die sich u. a. nach dem Verwendungszweck der Vulkanisate richten. Übliche Mengen sind 0,1 bis 30 phr.

Als Alterungsschutzmittel werden bevorzugt alkylierte Phenole, styrolisiertes Phenol, sterisch gehinderte Phenole wie 2,6-Di-tert.-butylphenol, 2,6-Di-tert-butyl-p-kresol (BHT), 2,6-Di-tert.-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie sterisch gehinderte Thiobisphenole verwendet.

Falls eine Verfärbung des Kautschuks ohne Bedeutung ist, können auch aminische Alterungsschutzmittel z. B. Mischungen aus Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z. B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N'-bis-(1,4-Dimethylpentyl)-p-phenylendiamin (77PD) eingesetzt werden.

Weitere Alterungsschutzmittel sind Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI), welche meist in Kombination mit obigen phenolischen Alterungsschutzmitteln eingesetzt werden. TMQ, MBI und MMBI werden vor allem für NBR-Kautschuke verwendet, welche peroxidisch vulkanisiert werden.

Die Ozonbeständigkeit kann durch Antioxidantien wie beispielsweise N-1,3-Dimethylbutyl-N'-phenyl-p-phenylendiamin (6PPD), N-1,4-Dimethylpentyl-N'-phenyl-p-phenylendiamin (7PPD), N,N'-Bis- (1,4-dimethylpentyl)-p-phenylendiamin (77PD), Enolether oder cyclische Acetale. verbessert werden.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, kann die erfindungsgemäße Kautschukmischungszusammensetzung auch Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können dem Kautschukvulkanisat auch weitere Kunststoffe beigefügt werden, welche beispielsweise als polymere Verarbeitungshilfsmittel oder Schlagzähigkeitsverbesserer wirken. Diese Kunststoffe werden bevorzugt gewählt aus der Gruppe bestehend aus den Homo-und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C₁- bis C₁₀-Alkoholen, wobei Polyacrylate mit gleichen oder verschiedenen Alkoholresten aus der Gruppe der C₄- bis C₈-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

In einer bevorzugten Ausführungsform enthält die erfindungsgemäße Kautschukmischung 0,1 bis 15 phr des Reversionsschutzmittels 1,6-Bis(N,N-dibenzylthiocarbamoyldithio)hexan (CAS-Nr.: 151900-44-6), wodurch eine weitere Verringerung von tan δ (60 °C), d.h. des Rollwiderstands ermöglicht wird.

Die erfindungsgemäßen Kautschukmischung zeichnen sich typischerweise dadurch aus, dass ein daraus bei 170°C/t95 geheiztes Vulkanisat einen Verlustfaktor tan δ bei 60°C von < 0,12 aufweist.

Bevorzugt zeichnen sich die erfindungsgemäßen Kautschukmischung dadurch aus, dass ein daraus bei 170°C/t95 geheiztes Vulkanisat einen Verlustfaktor tan δ bei 60°C von < 0,12 und gleichzeitig eine Härte Shore A bei 23°C von > 64 aufweist insbesondere > 65 aufweist. In Kombination damit können durch die erfindungsgemäßen Kautschukmischungen auch eine Ausvulkanisationszeit von kleiner 2000 Sekunden und eine Abrasion von < 60, besonders bevorzugt von < 55 erreicht werden.

Ein weiterer Gegenstand der vorliegenden Erfindung ist ein Verfahren zur Herstellung von Kautschukmischungen, durch Mischen von mindestens einem Kautschuk mit mindestens einem kieselsäurebasierenden Füllstoff, einem schwefelhaltigen Alkoxysilan und mindestens einem ω-Mercaptocarbonsäureester eines mehrwertigen Alkohols. Vorzugsweise werden dabei 10 bis 150 phr, besonders bevorzugt 30 bis 120 phr und ganz besonders bevorzugt 50 bis 100 phr Füllstoff, 0,1 bis 15 phr, besonders bevorzugt 0,3 bis 7 phr, ganz besonders bevorzugt 0,5 bis 3 phr und am meisten bevorzugt 0,7 bis 1,5 phr ω-Mercaptocarbonsäureester von mehrwertigen Alkoholen sowie 2 bis 20 phr, besonders bevorzugt 3-11 phr und ganz besonders bevorzugt 5 bis 8 phr des schwefelhaltigen Alkoxysilans eingesetzt. Weiterhin können im Mischverfahren die oben genannten zusätzlichen Füllstoffe, Vernetzer, Vulkanisationsbeschleuniger und Kautschukhilfsmittel, vorzugsweise in den oben angegebenen Mengen zugesetzt werden.

Bei Verwendung mehrerer ω-Mercaptocarbonsäureester von mehrwertigen Alkoholen können diese separat oder in beliebiger Mischung zu der Kautschukmischung hinzugegeben werden. Bei dem mehrstufigen Mischverfahren erfolgt die Zugabe der ω-Mercaptocarbonsäureester von mehrwertigen Alkoholen bevorzugt im ersten Teil des Mischprozesses und die Zugabe von einem oder mehreren Vernetzern, insbesondere Schwefel, und ggf. Vulkanisationsbeschleuniger in einer späteren Mischstufe. Die Temperatur der Kautschukmasse beträgt dabei vorzugsweise 100 bis 200 °C, besonders bevorzugt 120°C bis 170 °C. Die Scherraten bei der Mischung betragen 1 bis 1000 sec⁻¹, bevorzugt 1 bis 100 sec⁻¹. In einer bevorzugten Ausführungsform wird die Kautschukmischung nach der ersten Mischstufe abgekühlt und der Vernetzer und ggf. Vernetzungsbeschleuniger und/oder Zusätze mit deren Hilfe die Vernetzungsausbeute erhöht wird, in einer späteren Mischstufe bei < 140°C, vorzugsweise < 100°C zugegeben. Die Zugabe der ω-Mercaptocarbonsäureester von mehrwertigen Alkoholen in einer späteren Mischstufe und bei tieferen Temperaturen wie 40 bis 100°C ist ebenfalls möglich z.B. zusammen mit Schwefel und Vernetzungsbeschleuniger.

Die Abmischungen des Kautschuks mit dem Füllstoff und den ω-Mercaptocarbonsäureester von mehrwertigen Alkoholen kann in üblichen Mischaggregaten, wie Walzen, Innenmischer und Mischextruder, durchgeführt werden.

Die optionale Zugabe von 1,6-Bis(N,N-dibenzylthiocarbamoyldithio)hexan findet vorzugsweise in der ersten Stufe des mehrstufigen Mischverfahrens statt.

Ein weiterer Gegenstand der vorliegenden Erfindung ist ein Verfahren zur Vulkanisation der erfindungsgemäßen Kautschukmischungen, welche bevorzugt bei Massetemperaturen von 100 bis 200 °C, besonders bevorzugt bei 130 bis 180 °C durchgeführt wird. In einer bevorzugten Ausführungsform geschieht die Vulkanisation bei einem Druck von 10 bis 200 bar.

Die vorliegende Erfindung umfasst auch Kautschukvulkanisate erhältlich durch Vulkanisation der erfindungsgemäßen Kautschukmischungen. Diese Vulkanisate weisen insbesondere bei Anwendung in Reifen die Vorteile eines niedrigen Rollwiderstands gepaart mit einem guten Nassrutschverhalten und einem geringen Verschleiß auf.

Die erfindungsgemäßen Kautschukvulkanisate eignen sich zur Herstellung von Formkörpern mit verbesserten Eigenschaften, z.B. für die Herstellung von Kabelmäntel, Schläuchen, Treibriemen, Förderbändern, Walzenbelägen, Reifen, Schuhsohlen, Dichtungsringen und Dämpfungselementen.

Das erfindungsgemäße Kautschukvulkanisat kann zudem zur Herstellung von Schaumstoffen verwendet werden. Dazu werden ihr chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxybis(benzol-sulfohydrazid), p-Toluolsulfonylsemicarbazid, 5-Phenyltetrazol, N,N'-Dinitroso-pentamethylen-tetramin, Zinkcarbonat oder Natriumhydrogencarbonat sowie diese Substanzen enthaltende Mischungen. Als physikalisch wirkende Treibmittel sind beispielsweise Kohlendioxid oder Halogenkohlenwasserstoffe geeignet.

Ein weiterer Gegenstand der vorliegenden Erfindung ist die Verwendung von ω-Mercapto-C₂-C₆-carbonsäureester eines mehrwertigen C₂-C₆-Alkohols, bei welchem mindestens 33%, bevorzugt mindestens 50% und besonders bevorzugt mindestens 66% und am meisten bevorzugt mindestens 75 %, jedoch mindestens 2 der Hydroxygruppen des mehrwertigen C₂-C₆-Alkohols mit ω-Mercapto-C₂-C₆-carbonsäure(n) verestert sind, wobei es sich beim mehrwertigen Alkohol vorzugsweise um Ethylenglycol, Diethylenglycol, Triethylenglycol, Trimethylolpropan, Neopentylglykol, Glycerin oder Pentaerythrit, besonders bevorzugt um Ethylenglycol, Trimethylolpropan oder Pentaerythrit, und ganz besonders bevorzugt um Trimethylolpropan oder Pentaerythrit handelt, wobei der ω-Mercapto-C₂-C₆-carbonsäureester vorzugsweise auf einer oder mehreren ω-Mercapto-C₂-C₆-carbonsäuren basiert, welche zwischen Thiol- und Carboxylgruppe eine lineare oder verzweigte, bevorzugt eine lineare, C₁-C₅- Alkandiyleinheit, bevorzugt eine C₁-C₃ Alkandiyleinheit und ganz besonders bevorzugt eine C₂- Alkandiyleinheit aufweist, insbesondere von einer oder mehrerer Verbindungen der Formeln I, II und III, zur Herstellung von Kautschukmischungen, und deren Vulkanisaten insbesondere zur Herstellung von Kautschukmischungen enthaltend zumindest jeweils einen Kautschuk, ein schwefelhaltiges Alkoxysilan und einen kieselsäurebasierenden Füllstoff.

### Bestimmung der Eignschaften von Kautschukmischung bzw. Vulkanisaten:

### Mooney-Viskositätsmessung;

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

### Scorch-Verhalten (Anvulkanisationszeit 5):

Des Weiteren kann mit der gleichen Prüfung wie oben beschrieben auch das Scorch-Verhalten einer Mischung gemessen werden. Die gewählte Temperatur betrug 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (Einheit Sekunden), umso langsamer findet die Anvulkanisation statt. In der Praxis ist meist eine Anvulkanisationszeit von mehr als 300 Sekunden vorteilhaft, welche unter Berücksichtigung von Verarbeitungssicherheit und Zeitaufwand aber weniger als 1000 Sekunden und in besonderen Fällen weniger als 500 Sekunden betragen sollte.

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Als Ausvulkanisationszeit, wird die Zeit bestimmt, bei der 95% des Kautschuks vernetzt ist. Die gewählte Temperatur betrug 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A mittels eines digitalen Shore-Härte-Testers (Zwick GmbH & Co. KG, Ulm) bestimmt wurden. Die Härte eines Kautschukvulkanisates gibt einen ersten Hinweis über dessen Steifigkeit wieder.

### Zugversuch:

Der Zugversuch dient direkt zur Ermittlung der Belastungsgrenzen eines Elastomers und erfolgt nach DIN 53504.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette. Der Verlustfaktor tan δ wird dabei indirekt über das Verhältnis zwischen Verlustmodul G" und Speichermodul G' bestimmt. Der Verlustfaktor tan δ (0 °C) gibt einen ersten Hinweis auf das Nassrutschverhalten und sollte möglichst hoch sein (gute Nasshaftung), wohingegen tan δ bei 60 bis 70 °C mit dem Rollwiderstand einhergeht und möglichst niedrig sein sollte.

### Abrieb:

Der Abrieb gibt einen Hinweis auf die Abnutzung und damit auf die Lebensdauer eines Produktes. Der Abrieb wurde nach DIN 53516 bestimmt. Aus ökonomischen und ökologischen Gründen ist ein niedriger Wert anzustreben.

### Verbindung 1

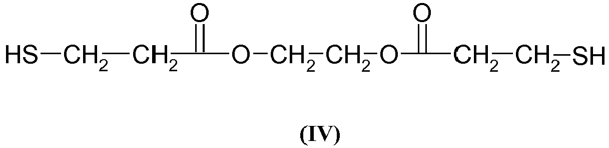

### Verbindung 2

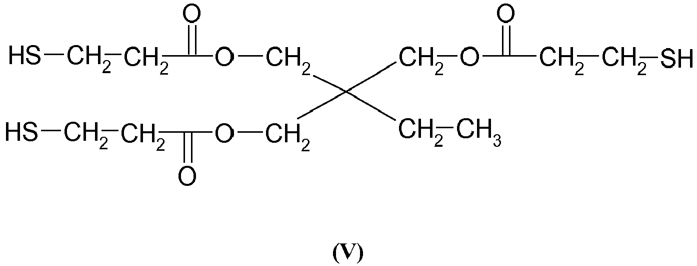

### Verbindung 3

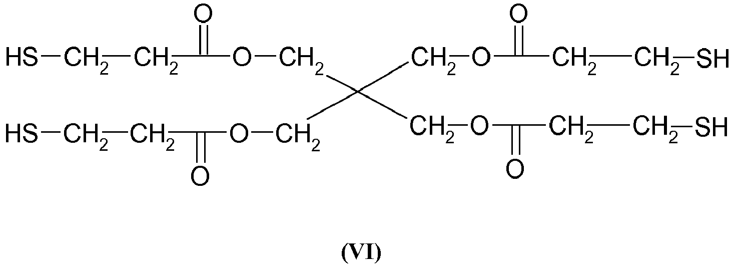

### Herstellung von Kautschukmischungen und Kautschukvulkanisaten

Die in Tabelle 1 aufgeführten Kautschuk-Rezepturen wurden jeweils gemäß nachfolgend beschriebenen, mehrstufigen Verfahren gemischt.
1. Mischstufe:
   ■ BUNA^{®} CB 24 und BUNA^{®} VSL 5025-2 wurde in einem Innenmischer vorgelegt und ca. 30 Sekunden gemischt
   ■ Zugabe zwei Drittel VULKASIL^{®} S, zwei Drittel SI^{®} 69, zwei Drittel der Gesamtmenge an ω-Mercaptocarbonsäureestern von mehrwertigen Alkoholen, mischen für ca. 60 Sekunden
   ■ Zugabe ein Drittel VULKASIL^{®} S, ein Drittel SI^{®} 69, ein Drittel der Gesamtmenge an ω-Mercaptocarbonsäureestem von mehrwertigen Alkoholen, sowie TUDALEN 1849-1, mischen ca. 60 Sekunden
   Zugabe von CORAX^{®} N 339, EDENOR^{®} C 18 98-100, VULKANOX^{®} 4020/LG, VULKANOX^{®} HS/LG, ZINKWEISS ROTSIEGEL sowie ANTILUX^{®} 654, mischen für ca. 60 Sekunden. Die Mischung erfolgte bei einer Temperatur von 150°C.
2. Mischstufe:
   Nach Abschluss der ersten Mischstufe wurde das Mischstück von einem nachgeschalteten Walzwerk aufgenommen und zu einer Platte ausgeformt und für 24 Stunden bei Raumtemperatur gelagert. Die Verarbeitungstemperaturen lagen hierbei unter 60°C.
3. Mischstufe:
   In der dritten Mischstufe erfolgte ein Nachzwicken bei 150°C in einem Kneter.
4. Mischstufe:
   Zugabe der Zusatzstoffe MAHLSCHWEFEL 90/95 CHANCEL, VULKACIT^{®} CZ/C, VULKACIT^{®} D/C auf einer Walze bei Temperaturen unter 80°C.

Die Kautschukmischungen wurden anschließend bei 170°C ausvulkanisiert. Die Eigenschaften der hergestellten Kautschukzubereitungen und deren Vulkanisate sind in Tabelle 2 angegeben.

**Tabelle 1: Kautschuk-Rezeptur**

| | **Referenz** | **Kautschukrezeptur 1** | **Kautschukrezeptur 2** | **Kautschukrezeptur 3** |
|---|---|---|---|---|
| BUNA CB 24 | 30 | 30 | 30 | 30 |
| BUNA VSL 5025-2 | 96 | 96 | 96 | 96 |
| CORAX N 339 | 6,4 | 6,4 | 6,4 | 6,4 |
| VULKASIL S | 80 | 80 | 80 | 80 |
| TUDALEN 1849-1 | 8 | 8 | 8 | 8 |
| EDENOR C 18 98-100 | 1 | 1 | 1 | 1 |
| VULKANOX 4020/LG | 1 | 1 | 1 | 1 |
| VULKANOX HS/LG | 1 | 1 | 1 | 1 |
| ZINKWEISS ROTSIEGEL | 2,5 | 2,5 | 2,5 | 2,5 |
| ANTILUX 654 | 1,5 | 1,5 | 1,5 | 1,5 |
| SI 69 | 6,4 | 6,4 | 6,4 | 6,4 |
| VULKACIT D/C | 2 | 2 | 2 | 2 |
| VULKACIT CZ/C | 1,5 | 1,5 | 1,5 | 1,5 |
| MAHLSCHWEFEL 90/95 CHANCEL | 1,5 | 1,5 | 1,5 | 1,5 |
| Verbindung 1 | | 1 | | |
| Verbindung 2 | | | 1 | |
| Verbindung 3 | | | | 1 |

Mengenangaben in phr (Gewichtsteile pro 100 Teile Kautschuk)

| **Handelsname** | **Erläuterung** | **Hersteller/Vertrieb** |
|---|---|---|
| BUNA CB 24 | BR | Lanxess Deutschland GmbH |
| BUNA VSL 5025-2 | SBR | Lanxess Deutschland GmbH |
| CORAX N 339 | Ruß | Degussa-Evonik GmbH |
| VULKASIL S | Kieselsäure | Lanxess Deutschland GmbH |
| TUDALEN 1849-1 | Mineralöl | Hansen&Rosenthal KG |
| EDENOR C 18 98-100 | Stearinsäure | Cognis Deutschland GmbH |
| VULKANOX 4020/LG | N-1,3-Dimethylbutyl-N-phenyl-p-phenylendiamin | Lanxess Deutschland GmbH |
| VULKANOX HS/LG | 2,2,4-Trimethyl-1,2-dihydrochinolin polymerisiert | Lanxess Deutschland GmbH |
| ZINKWEISS ROTSIEGEL | Zinkoxid | Grillo Zinkoxid GmbH |
| ANTILUX 654 | Lichtschutzwachs | RheinChemie Rheinau GmbH |
| SI 69 | Bis(triethoxysilylpropyl)tetrasulfid | Evonik Industries |
| VULKACIT D/C | 1,3-Diphenylguanidin | Lanxess Deutschland GmbH |
| VULKACIT CZ/C | N-cyclohexyl-2-benzothiazol-sulfenamid | Lanxess Deutschland GmbH |
| MAHLSCHWEFEL 90/95 CHANCEL | Schwefel | Solvay Deutschland GmbH |

**Tabelle 2: Zusammenstellung der Ergebnisse**

| **Parameter** | **Einheit** | **DIN** | **Referenz** | **Kautschukrezeptur 1** | **Kautschukrezeptur 2** | **Kautschukrezeptur 3** |
|---|---|---|---|---|---|---|
| Mooney Viskosität (ML 1+4) | [ME] | 53523 | 94 | 121 | 116 | 109 |
| Mooney Anvulkanisation bei 130°C (t5) | sec | gemäß ASTM D 5289-95 | 602 | 388 | 398 | 405 |
| Ausvulkanisation bei 170°C / t95 | sec | 53529 | 1494 | 1963 | 1671 | 1646 |
| Shore A Härte bei 23°C | [Shore A] | 53505 | 65 | 68 | 68 | 65 |
| Zugfestigkeit | MPa | 53504 | 22 | 20 | 19 | 18 |
| Abrieb | mm³ | 53516 | 65 | 49 | 52 | 53 |
| Nassrutschverhalten (tan δ (0°C)) | - | | 0,430 | 0,474 | 0,483 | 0,481 |
| Rollwiderstand (tan δ (60 °C)) | - | | 0,129 | 0,111 | 0,114 | 0,109 |

Die getesteten Vulkanisate zeigen im Vergleich zur Referenz ein sehr gutes Nassrutschverhalten (tan ω bei 0°C > 0,45) und exzellente Rollwiderstände (tan δ bei 60°C < 0,12) in Kombination mit äußerst vorteilhaften Abriebwerten (< 60 mm³).

## Patentansprüche

1. Kautschukmischung enthaltend jeweils zumindest:
- einen Kautschuk,
- ein schwefelhaltiges Alkoxysilan,
- einen kieselsäurebasierenden Füllstoff,
- einen ω-Mercapto-C₂-C₆-carbonsäureester eines mehrwertigen C₂-C₆-Alkohols, bei
welchem mindestens 33%, bevorzugt mindestens 50% und besonders bevorzugt mindestens 66% und am meisten bevorzugt mindestens 75%, jedoch mindestens 2 der Hydroxygruppen des mehrwertigen C₂-C₆-Alkohols mit ω-Mercapto-C₂-C₆-carbonsäure(n) verestert sind.

2. Kautschukmischung gemäß Anspruch 1, **dadurch gekennzeichnet, dass** die Kautschukmischung zusätzlich mindestens einen Vernetzer enthält.

3. Kautschukmischung gemäß Anspruch 1 oder 2 **dadurch gekennzeichnet, dass** die Gesamtmenge an ω-Mercapto-C₂-C₆-carbonsäureester(n) 0,1 bis 15 phr, besonders bevorzugt 0,3 bis 7 phr, ganz besonders bevorzugt 0,5 bis 3 phr und am meisten bevorzugt 0,7 bis 1,5 phr beträgt.

4. Kautschukmischung gemäß einem der Ansprüche 1 bis 3 **dadurch gekennzeichnet, dass** der mehrwertige Alkohol Ethylenglycol, Diethylenglycol, Triethylenglycol, Trimethylolpropan, Neopentylglykol, Glycerin oder Pentaerythrit, bevorzugt Ethylenglycol, Trimethylolpropan oder Pentaerythrit, und besonders bevorzugt Trimethylolpropan oder Pentaerythrit ist.

5. Kautschukmischung gemäß einem der Ansprüche 1 bis 4 **dadurch gekennzeichnet, dass** der ω-Mercapto-C₂-C₆-carbonsäureester auf einer oder mehreren ω-Mercapto-C₂-C₆-carbonsäuren basiert, welche zwischen Thiol- und Carboxylgruppe eine lineare oder verzweigte, bevorzugt eine lineare, C₁-C₅- Alkandiyleinheit, bevorzugt eine C₁-C₃ Alkandiyleinheit und ganz besonders bevorzugt eine C₂- Alkandiyleinheit aufweisen.

6. Kautschukmischung gemäß einem der Ansprüche 1 bis 5, wobei als ω-Mercapto-C₂-C₆-carbonsäureester eines mehrwertigen C₂-C₆-Alkohols eine oder mehrere Verbindungen der Formel (I), 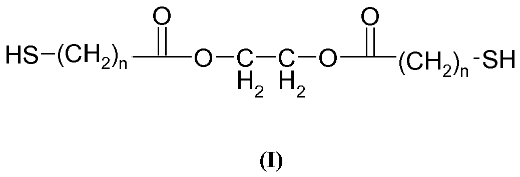 und/oder der Formel (II), 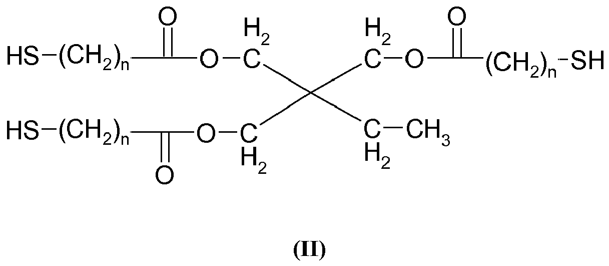 und/oder der Formel (III) 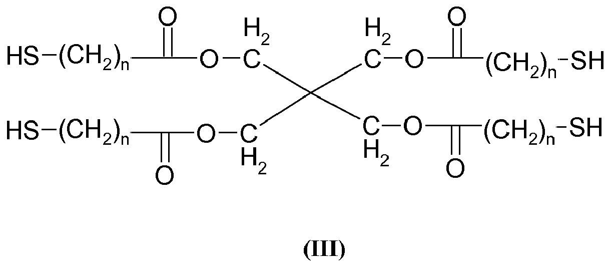 verwendet werden,
wobei n für 1, 2 oder 3, bevorzugt für 1 oder 2 und besonders bevorzugt für 2 steht.

7. Kautschukmischung gemäß einem der Ansprüche 1 bis 6, **dadurch gekennzeichnet, dass** sie als Kautschuk mindestens einen SBR-Kautschuk und mindestens einen BR-Kautschuk, vorzugsweise im Gewichtsverhältnis SBR-Kautschuk:BR-Kautschuk von 60:40 bis 90:10 enthält.

8. Kautschukmischung gemäß Anspruch 7, **dadurch gekennzeichnet, dass** sie zusätzlich mindestens einen NR-Kautschuk enthält, vorzugsweise in einem Gewichtsverhältnis SBR-Kautschuk zu BR-Kautschuk zu NR-Kautschuk von 60 bis 85 : 10 bis 35 : 5 bis 20.

9. Kautschukmischung gemäß einem der Ansprüche 1 bis 8 **dadurch gekennzeichnet, dass** der Gesamtgehalt an schwefelhaltigem Alkoxysilan 2 bis 20 phr, bevorzugt 3 bis 11 phr und besonders bevorzugt 5 bis 8 phr beträgt, wobei vorzugsweise das Gewichtsverhältnis von Alkoxysilan zur Gesamtmenge an ω-Mercapto-C₂-C₆-carbonsäureester(n) eines mehrwertigen C₂-C₆-Alkohols 1,5:1 bis 20:1, besonders bevorzugt 3:1 bis 15:1 und am meisten bevorzugt 5:1 bis 10:1 beträgt.

10. Kautschukmischung gemäß einem der Ansprüche 1 bis 9, **dadurch gekennzeichnet, dass** der kieselsäurebasierende Füllstoff aus der Gruppe Fällungskieselsäure, pyrogene Kieselsäure, natürliche Silikate und synthetische Silikate, vorzugsweise aus der Gruppe enthaltend gefällte Kieselsäuren oder Silikate mit einer spezifischen Oberfläche von 20 bis 400 m²/g, besonders bevorzugt aus der Gruppe enthaltend gefällte Kieselsäuren und Silikate mit einer spezifischen Oberfläche von 100 bis 200 m²/g ausgewählt wird.

11. Kautschukmischung gemäß einem der Ansprüche 1 bis 8, **dadurch gekennzeichnet, dass** sie weitere Füllstoffe, insbesondere Ruße und/oder Kautschukhilfsmittel enthält ausgewählt aus der Gruppe Reaktionsbeschleuniger, Alterungsschutzmittel, Wärmestabilisatoren, Lichtschutzmittel, Antioxidantien insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol und Reversionsschutzmittel, insbesondere 1,6-Bis(N,N-dibenzylthiocarbamoyl-dithio)hexan.

12. Verfahren zur Herstellung von Kautschukmischungen gemäß einem der Ansprüche 1 bis 11, durch Mischen von mindestens einem Kautschuk mit mindestens einem kieselsäurebasierenden Füllstoff, einem schwefelhaltigen Alkoxysilan und mindestens einem ω-Mercaptocarbonsäureester eines mehrwertigen Alkohols, vorzugsweise durch ein mehrstufiges Mischverfahren, in welchem die Zugabe von ω-Mercaptocarbonsäureester von mehrwertigen Alkoholen in der ersten Stufe des Mischprozesses und die Zugabe eines oder mehrerer Vernetzer in einer späteren Mischstufe erfolgt.

13. Verfahren zur Herstellung von Vulkanisaten **dadurch gekennzeichnet, dass** man die Kautschukmischung gemäß einem der Ansprüche 1 - 11 vulkanisiert, vorzugsweise bei Massetemperaturen von 100 bis 200 °C, besonders bevorzugt bei Massetemperaturen von 130 bis 180 °C.

14. Vulkanisate, insbesondere Reifen und Reifenbauteile, erhältlich durch Vulkanisation der Kautschukmischungen gemäß einem der Ansprüche 1 - 11.

15. Verwendung von ω-Mercapto-C₂-C₆-carbonsäureester eines mehrwertigen C₂-C₆-Alkohols, bei welchem mindestens 33%, bevorzugt mindestens 50% und besonders bevorzugt mindestens 66% und am meisten bevorzugt mindestens 75%, jedoch mindestens 2 der Hydroxygruppen des mehrwertigen C₂-C₆-Alkohols mit ω-Mercapto-C₂-C₆-carbonsäure(n) verestert sind,
wobei es sich beim mehrwertigen Alkohol vorzugsweise um Ethylenglycol, Diethylenglycol, Triethylenglycol, Trimethylolpropan, Neopentylglykol, Glycerin oder Pentaerythrit, besonders bevorzugt um Ethylenglycol, Trimethylolpropan oder Pentaerythrit, und ganz besonders bevorzugt um Trimethylolpropan oder Pentaerythrit handelt,
wobei der ω-Mercapto-C₂-C₆-carbonsäureester vorzugsweise auf einer oder mehreren ω-Mercapto-C₂-C₆-carbonsäuren basiert, welche zwischen Thiol- und Carboxylgruppe eine lineare oder verzweigte, bevorzugt eine lineare, C₁-C_{S}- Alkandiyleinheit, bevorzugt eine C₁-C₃ Alkandiyleinheit und ganz besonders bevorzugt eine C₂- Alkandiyleinheit aufweist, insbesondere von einer oder mehrerer Verbindungen der Formeln I, II und III gemäß Anspruch 6, zur Herstellung von Kautschukmischungen und deren Vulkanisaten.
